# EUROPÄISCHE PATENTSCHRIFT

(11) **EP 0 790 258 B1**
(45) Veröffentlichungstag und Bekanntmachung des Hinweises auf die Patenterteilung: **01.10.2003**
(21) Anmeldenummer: 97103579.5
(22) Anmeldetag: 26.07.1994
(51) Int. Cl.: C08F 8/30, G02B 1/04

(54) **Photovernetzte Polymere**
Photo-crosslinked polymers
Polymères photoréticulés

(30) Priorität: 06.08.1993 CH 235093
(43) Veröffentlichungstag der Anmeldung: 20.08.1997
(62) Teilanmeldung aus: 94810444.3
(73) Patentinhaber: Novartis AG, 4056 Basel (CH)
(72) Erfinder: Müller, Beat, 1723 Marly (CH)

(56) Entgegenhaltungen:
- EP-A- 0 216 074
- EP-A- 0 321 403
- GB-A- 2 263 699
- US-A- 4 670 506

## Beschreibung

Die vorliegende Erfindung betrifft Präpolymere, die in einem neuen Verfahren zur Herstellung von Formkörpern, insbesondere von Kontaktlinsen, eingesetzt werden können, bei dem ein lösliches Präpolymer, enthaltend vemetzbare Gruppen, in Lösung vernetzt wird.

Die Erfindung betrifft insbesondere solche Präpolymere auf der Grundlage von Polyvinylalkohol, die cyclische Acetalgruppen und vernetzbare Gruppen enthalten, vernetzte Polymere, entweder Homo- oder Copolymere aus diesen neuen Präpolymeren, Verfahren zur Herstellung der neuen Präpolymere und der daraus erhältlichen Homo- und Copolymere, und Formkörper aus den genannten Homo- oder Copolymeren, insbesondere Kontaktlinsen aus diesen Homo- oder Copolymeren.

Kontaktlinsen auf der Grundlage von Polyvinylalkohol sind bereits bekannt. So werden z.B. in der EP 216,074 Kontaktlinsen offenbart, die Polyvinylalkohol enthalten, der über Urethangruppen gebundene (Meth)acryloylgruppen aufweist. In der EP 189,375 sind Kontaktlinsen aus mit Polyepoxiden vernetztem Polyvinylalkohol beschrieben.

Ferner sind auch einige spezielle Acetale bereits bekannt, die vernetzbare Gruppen enthalten. In diesem Zusammenhang wird beispielsweise auf die EP 201,693, auf die EP 215,245 und auf die EP 211,432 verwiesen. In der EP 201,693 werden unter anderem Acetale von unverzweigten Aldehyden mit 2 bis 11 Kohlenstoffatomen beschrieben, die endständig eine Aminogruppe tragen, welche Aminogruppe mit einem C₃-C₂₄-olefinisch ungesättigten organischen Radikal substituiert ist. Dieses organische Radikal weist eine Funktionalität auf, die vom Stickstoffatom Elektronen abzieht, ferner ist die olefinisch ungesättigte Funktionalität polymerisierbar. In der EP 201,693 werden auch Reaktionsprodukte von den vorstehend charakterisierten Acetalen mit einem 1,2-Diol, einem 1,3-Diol, einem Polyvinylalkohol oder einer Cellulose beansprucht. Jedoch sind derartige Produkte nicht konkret beschrieben.

Wenn eines der Acetale gemäss EP 201,693 überhaupt im Zusammenhang mit z.B. Polyvinylalkohol erwähnt wird, wie dies u.a. in Beispiel 17 jener Patentanmeldung der Fall ist, dann wird das über seine olefinische Gruppe polymerisierbare Acetal zuerst mit beispielsweise Vinylacetat copolymerisiert. Das so erhaltene Copolymer wird danach mit Polyvinylalkohol umgesetzt, und es wird eine 37 % Feststoffe enthaltende Emulsion mit einem pH von 5,43 und einer Viskosität von 11640 cps erhalten.

Demgegenüber ist die vorliegende Erfindung unter anderem auf Präpolymere gerichtet, die ein 1,3-Diol-Grundgerüst enthalten, wobei ein gewisser Prozentsatz der 1,3-Diol-Einheiten zu einem 1,3-Dioxan modifiziert ist, das in 2-Position einen polymerisierbaren aber nicht polymerisierten Rest aufweist. Der polymerisierbare Rest ist insbesondere ein Aminoalkylrest, an dessen Stickstoffatom eine polymerisierbare Gruppe gebunden ist. Die vorliegende Erfindung betrifft ebenfalls vernetzte Homo- oder Copolymere der genannten Präpolymere, Verfahren zur Herstellung der neuen Präpolymere und der daraus erhältlichen Homo- und Copolymere und Formkörper aus den genannten Homo- oder Copolymeren, insbesondere Kontaktlinsen aus diesen Homo- oder Copolymeren .

Bei dem erfindungsgemässen Präpolymer handelt es sich vorzugsweise um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel I enthält, 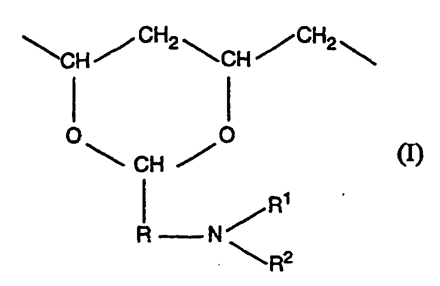 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

R² steht beispielsweise für einen olefinisch ungesättigten Acylrest der Formel R³-CO-, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet. In einer anderen Ausführungsform steht der Rest R² für einen Rest der Formel II

-CO-NH-(R⁴-NH-CO-O)_{q}-R⁵-O-CO-R³ (II)

worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ die vorstehend angegebene Bedeutung hat.

Bei dem erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, 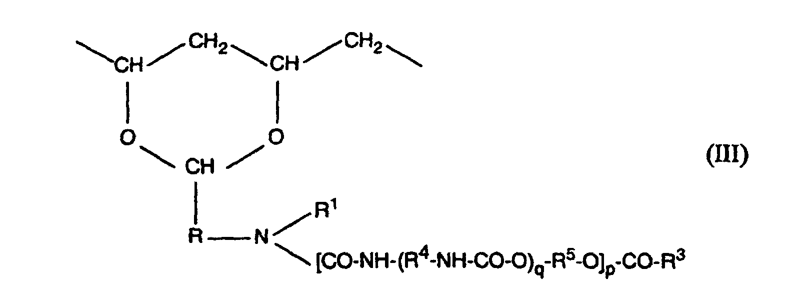 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

Niederalkylen R weist vorzugsweise bis zu 8 Kohlenstoffatome auf und kann geradkettig oder verzweigt sein. Geeignete Beispiele umfassen Octylen, Hexylen, Pentylen, Butylen, Propylen, Ethylen, Methylen, 2-Propylen, 2-Butylen oder 3-Pentylen. Vorzugsweise weist Niederalkylen R bis zu 6 und besonders bevorzugt bis zu 4 Kohlenstoffatome auf. Besonders bevorzugt sind die Bedeutungen Methylen und Butylen.

R¹ bedeutet vorzugsweise Wasserstoff oder Niederalkyl mit bis zu sieben, insbesondere bis zu vier Kohlenstoffatomen, insbesondere Wasserstoff.

Niederalkylen R⁴ oder R⁵ weist vorzugsweise 2 bis 6 Kohlenstoffatome auf und ist insbesondere geradkettig. Geeignete Beispiele umfassen Propylen, Butylen, Hexylen, Dimethylethylen und, besonders bevorzugt, Ethylen.

Arylen R⁴ oder R⁵ ist vorzugsweise Phenylen, das unsubstituiert oder durch Niederalkyl oder Niederalkoxy substituiert ist, insbesondere 1,3-Phenylen oder 1,4-Phenylen oder Methyl-1,4-phenylen.

Eine gesättigte bivalente cycloaliphatische Gruppe R⁴ oder R⁵ ist vorzugsweise Cyclohexylen oder Cyclohexylen-niederalkylen, z.B. Cyclohexylenmethylen, die unsubstituiert ist oder substituiert durch eine oder mehrere Methylgruppen, wie beispielsweise Trimethylcyclohexylenmethylen, z.B. der bivalente Isophoronrest.

Die Aryleneinheit von Alkylenarylen oder Arylenalkylen R⁴ oder R⁵ ist vorzugsweise Phenylen, unsubstituiert oder durch Niederalkyl oder Niederalkoxy substituiert, die Alkyleneinheit davon ist vorzugsweise Niederalkylen, wie Methylen oder Ethylen, insbesondere Methylen. Vorzugsweise sind derartige Reste R⁴ oder R⁵ daher Phenylenmethylen oder Methylenphenylen.

Arylenalkylenarylen R⁴ oder R⁵ ist vorzugsweise Phenylen-niederalkylen-phenylen mit bis zu 4 Kohlenstoffatomen in der Alkyleneinheit, z.B. Phenylenethylenphenylen.

Die Reste R⁴ und R⁵ bedeuten unabhängig voneinander vorzugsweise Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen.

Der Begriff "nieder" bedeutet im Rahmen dieser Erfindung im Zusammenhang mit Resten und Verbindungen, soweit er nicht abweichend definiert ist, Reste oder Verbindungen mit bis zu 7 Kohlenstoffatomen, vorzugsweise mit bis zu 4 Kohlenstoffatomen.

Niederalkyl weist insbesondere bis zu 7 Kohlenstoffatome auf, vorzugsweise bis zu 4 Kohlenstoffatome, und ist z.B. Methyl, Ethyl, Propyl, Butyl oder tert.-Butyl.

Niederalkoxy weist insbesondere bis zu 7 Kohlenstoffatome auf, vorzugsweise bis zu 4 Kohlenstoffatome, und ist z.B. Methoxy, Ethoxy, Propoxy, Butoxy oder tert.-Butoxy.

Der olefinisch ungesättigte copolymerisierbare Rest R³ mit 2 bis 24 Kohlenstoffatomen bedeutet vorzugsweise Alkenyl mit 2 bis 24 Kohlenstoffatomen, insbesondere Alkenyl mit 2 bis 8 Kohlenstoffatomen und besonders bevorzugt Alkenyl mit 2 bis 4 Kohlenstoffatomen, beispielsweise Ethenyl, 2-Propenyl, 3-Propenyl, 2-Butenyl, Hexenyl, Octenyl oder Dodecenyl. Bevorzugt sind die Bedeutungen Ethenyl und 2-Propenyl, so dass die Gruppe -CO-R³ für den Acylrest der Acrylsäure oder Methacrylsäure steht.

Die bivalente Gruppe -R⁴-NH-CO-O- ist vorhanden, wenn q für eins steht und abwesend, wenn q für Null steht. Präpolymere, in denen q für Null steht, sind bevorzugt.

Die bivalente Gruppe -CO-NH-(R⁴-NH-CO-O)_{q}-R⁵-O- ist vorhanden, wenn p für eins steht und abwesend, wenn p für Null steht. Präpolymere, in denen p für Null steht, sind bevorzugt.

In den Präpolymeren, in denen p für eins steht, bedeutet der Index q vorzugweise Null. Insbesondere sind Präpolymere bevorzugt, in denen p für eins steht, der Index q Null bedeutet und R⁵ für Niederalkylen steht.

Bei einem bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p Null bedeutet und R³ Alkenyl mit 2 bis 8 Kohlenstoffatomen bedeutet.

Bei einem weiteren bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

Bei einem weiteren bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

Die erfindungsgemässen Präpolymere sind vorzugsweise Derivate von Polyvinylalkohol mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, insbesondere etwa 1 bis 50 %, weiter bevorzugt etwa 1 bis 25 %, bevorzugt etwa 2 bis 15 % und besonders bevorzugt etwa 3 bis 10 %. Erfindungsgemässe Präpolymere, die zur Herstellung von Kontaktlinsen vorgesehen sind, enthalten insbesondere von etwa 0,5 bis etwa 25 %, bezogen auf Anzahl Hydroxylgruppen des Polyvinylalkohols, Einheiten der Formel III, insbesondere etwa 1 bis 15 % und besonders bevorzugt etwa 2 bis 12 %.

Polyvinylalkohole, die erfindungsgemäss derivatisiert werden können, haben vorzugsweise ein Molekulargewicht von mindestens 10000. Als Obergrenze können die Polyvinylalkohole ein Molekulargewicht von bis zu 1000000 aufweisen. Vorzugsweise haben die Polyvinylalkohole ein Molekulargewicht von bis zu 300000, insbesondere von bis zu etwa 100000 und ganz besonders bevorzugt von bis zu etwa 50000.

Ueblicherweise weisen erfindungsgemäss geeignete Polyvinylalkohole hauptsächlich eine Poly(2-hydroxy)ethylen - Struktur auf. Die erfindungsgemäss derivatisierten Polyvinylalkohole können jedoch auch Hydroxygruppen in Form von 1,2-Glykolen aufweisen, wie Copolymereinheiten von 1,2-Dihydroxyethylen, wie sie beispielsweise durch alkalische Hydrolyse von Vinylacetat-Vinylencarbonat-Copolymeren erhalten werden können.

Darüberhinaus können die erfindungsgemäss derivatisierten Polyvinylalkohole auch geringe Anteile, beispielsweise bis zu 20 %, vorzugsweise bis zu 5 %, von Copolymereinheiten von Ethylen, Propylen, Acrylamid, Methacrylamid, Dimethacrylamid, Hydroxyethylmethacrylat, Methylmethacrylat, Methylacrylat, Ethylacrylat, Vinylpyrrolidon, Hydroxyethylacrylat, Allylalkohol, Styrol oder ähnlichen üblicherweise verwendeten Comonomeren enthalten.

Es können handelsübliche Polyvinylalkohole verwendet werden, wie z.B. Vinol® 107 der Firma Air Products (MW = 22000 bis 31000, 98 - 98,8 % hydrolysiert), Polysciences 4397 (MW = 25000, 98,5 % hydrolysiert), BF 14 von Chan Chun, Elvanol® 90 - 50 von DuPont, UF-120 von Unitika, Moviol® 4-88, 10-98 und 20-98 von Hoechst. Andere Hersteller sind z.B. Nippon Gohsei (Gohsenol®), Monsanto (Gelvatol®), Wacker (Polyviol®) oder die japanischen Hersteller Kuraray, Denki und Shin-Etsu.

Wie bereits erwähnt, können auch Copolymere von hydrolysiertem Vinylacetat verwendet werden, die beispielsweise als hydrolysiertes Ethylen-vinylacetat (EVA) erhältlich sind, oder Vinylchlorid-Vinylacetat, N-Vinylpyrrolidon-Vinylacetat und Maleinsäureanhydrid-Vinylacetat.

Polyvinylalkohol wird üblicherweise durch Hydrolyse des entsprechenden homopolymeren Polyvinylacetat hergestellt. In einer bevorzugten Ausführungsform enthält der erfindungsgemäss derivatisierte Polyvinylalkohol weniger als 50 % Polyvinylacetat-Einheiten, insbesondere weniger als 20 % Polyvinylacetat-Einheiten. Bevorzugte Mengen an Rest-Acetateinheiten im erfindungsgemäss derivatisierten Polyvinylalkohol, bezogen auf die Summe von Vinylalkoholeinheiten und Acetateinheiten, sind etwa 3 bis 20 %, vorzugsweise etwa 5 bis 16 % und insbesondere etwa 10 bis 14 %.

Die Verbindungen enthaltend Einheiten der Formel III können auf an sich bekannte Weise hergestellt werden. Beispielsweise kann ein Polyvinylalkohol mit einem Molekulargewicht von mindestens etwa 2000, der Einheiten der Formel IV enthält,

-CH(OH)-CH₂- (IV)

mit etwa 0,5 bis 80 %, bezogen auf die Anzahl von Hydroxylgruppen der Verbindung der Formel IV, einer Verbindung der Formel (V) 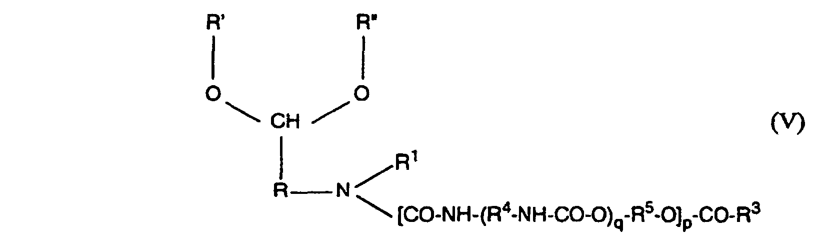 worin R' und R" unabhängig voneinander Wasserstoff, Niederalkyl oder Niederalkanoyl, wie Acetyl oder Propionyl, bedeuten und die anderen Variablen die für Formel III angegebene Bedeutung aufweisen, umgesetzt werden, insbesondere in saurem Medium.

Alternativ dazu kann ein Polyvinylalkohol mit einem Molekulargewicht von mindestens etwa 2000, der Einheiten der Formel IV enthält mit einer Verbindung der Formel VI 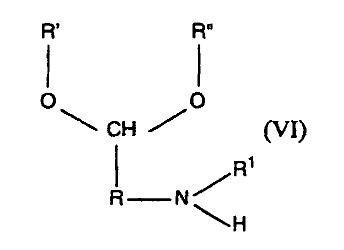 umgesetzt werden, worin die Variablen wie für die Verbindung der Formel V definiert sind, insbesondere unter sauren Bedingungen, und das auf diese Weise erhältliche cyclische Acetal anschliessend mit einer Verbindung der Formel VII umgesetzt werden

OCN-(R⁴-NH-CO-O)_{q}-R⁵-O-CO-R³ (VII)

worin die Variablen wie für die Verbindung der Formel V definiert sind.

Alternativ dazu kann das aus einer Verbindung der Formel IV und einer Verbindung der Formel VI wie vorstehend beschrieben erhältliche Produkt mit einer Verbindung der Formel (VIII)

X-CO-R³ (VIII)

umgesetzt werden, worin R³ z.B. Alkenyl mit 2 bis 8 Kohlenstoffatomen bedeutet und X für eine reaktionsfähige Gruppe steht, z.B. für verethertes oder verestertes Hydroxy, z.B. für Halogen, insbesondere für Chlor.

Verbindungen der Formel V, in denen p für Null steht, sind z.B. aus der EP 201,693 bekannt. Auch Verbindungen der Formel VI sind dort beschrieben. Verbindungen der Formel VII sind an sich bekannt oder lassen sich auf an sich bekannte Weise herstellen. Ein Beispiel für eine Verbindung der Formel VII, in der q für Null steht, ist Isocyanatoethylmethacrylat. Ein Beispiel für eine Verbindung der Formel VII, in der q für eins steht, ist das Reaktionsprodukt von Isophorondiisocyanat mit 0,5 Aequivalenten Hydroxyethylmethacrylat. Verbindungen der Formel VIII sind an sich bekannt, ein typischer Vertreter ist das Methacryloylchlorid. Verbindungen der Formel V, in denen p und / oder q für 1 stehen, lassen sich aus den vorstehend erwähnten Verbindungen auf an sich bekannte Weise herstellen, z.B. durch Umsetzung einer Verbindung der Formel VI mit Isocyanatoethylmethacrylat oder durch Umsetzung einer Verbindung der Formel VI mit Isophorondiisocyanat, das zuvor mit 0,5 Aequivalenten Hydroxyethylmethacrylat terminiert wurde.

Ueberraschenderweise sind die Präpolymere der Formel I bzw. III ausserordentlich stabil. Dies ist für den Fachmann unerwartet, weil beispielsweise höherfunktionelle Acrylate üblicherweise stabilisiert werden müssen. Werden derartige Verbindungen nicht stabilisiert, tritt üblicherweise rasche Polymerisation ein. Eine spontane Vernetzung durch Homopolymerisation findet jedoch mit den erfindungsgemässen Präpolymeren nicht statt. Die Präpolymere der Formel I bzw. III lassen sich darüber hinaus auf an sich bekannte Weise reinigen, beispielsweise durch Fällen mit Aceton, Dialyse oder Ultrafiltration, wobei die Ultrafiltration besonders bevorzugt ist. Durch diesen Reinigungsvorgang können die Präpolymere der Formel I bzw. III in äusserst reiner Form, z.B. als aufkonzentrierte wässrige Lösungen erhalten werden, die frei oder zumindest im wesentlichen frei sind von Reaktionsprodukten, wie Salzen, und von Ausgangsstoffen, wie z.B. Verbindungen der Formel V oder anderen nicht-polymeren Bestandteilen.

Das bevorzugte Reinigungsverfahren der erfindungsgemässen Präpolymere, eine Ultrafiltration, kann auf an sich bekannte Weise durchgeführt werden. Dabei besteht die Möglichkeit, die Ultrafiltration wiederholt durchzuführen, beispielsweise zwei- bis zehnmal. Alternativ dazu kann die Ultrafiltration auch kontinuierlich durchgeführt werden, bis der gewünschte Reinheitsgrad erreicht ist. Der gewünschte Reinheitsgrad kann grundsätzlich beliebig hoch gewählt werden. Ein geeignetes Mass für den Reinheitsgrad ist z.B. der Kochsalzgehalt der Lösung, der sich auf bekannte Weise einfach ermitteln lässt.

Die erfindungsgemässen Präpolymere der Formel I bzw. III sind andererseits auf äusserst effektive Weise und gezielt vernetzbar, insbesondere durch Photovernetzung.

Ein weiterer Gegenstand der vorliegenden Erfindung ist daher auf ein Polymer gerichtet, das durch Photovernetzung eines Präpolymeren enthaltend Einheiten der Formel I bzw. III erhalten werden kann, in Abwesenheit oder Anwesenheit eines zusätzlichen vinylischen Comonomeren. Diese Polymere sind wasserunlöslich.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, Darocure 1173 oder Irgacure-Typen genannt werden. Die Vernetzung kann dann durch aktinische Strahlung, wie z.B. UV-Licht, oder ionisierende Strahlung, wie z.B. Gammastrahlung oder Röntgenstrahlung, ausgelöst werden.

Die Photopolymerisation wird geeigneterweise in einem Lösungsmittel durchgeführt. Als Lösungsmittel sind grundsätzlich alle Lösungsmittel geeignet, die Polyvinylalkohol und die gegebenenfalls zusätzlich verwendeten vinylischen Comonomere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser / Ethanol- oder ein Wasser / Methanol-Gemisch.

Die Photovernetzung erfolgt vorzugsweise unmittelbar aus einer wässrigen Lösung der erfindungsgemässen Präpolymere heraus, die als Resultat des bevorzugten Reinigungsschrittes, einer Ultrafiltration, erhalten werden kann, gegebenenfalls nach Zusatz eines zusätzlichen vinylischen Comonomeren. Beispielsweise kann die Photovernetzung einer etwa 15 bis 40 %-igen wässrigen Lösung vorgenommen werden.

Das Verfahren zur Herstellung der erfindungsgemässen Polymere lässt sich beispielsweise dadurch charakterisieren, dass man ein Präpolymer enthaltend Einheiten der Formel I bzw. III, insbesondere in im wesentlichen reiner Form, d.h. zum Beispiel nach ein- oder mehrmaliger Ultrafiltration, vorzugsweise in Lösung, insbesondere in wässriger Lösung, in Abwesenheit oder Anwesenheit eines zusätzlichen vinylischen Comonomeren, photovernetzt.

Das vinylische Comonomer, das erfindungsgemäss bei der Photovernetzung zusätzlich verwendet werden kann, kann hydrophil, hydrophob oder ein Gemisch eines hydrophoben und eines hydrophilen vinylischen Monomeren sein. Geeignete vinylische Monomere umfassen insbesondere diejenigen, die üblicherweise bei der Herstellung von Kontaktlinsen verwendet werden. Unter einem hydrophilen vinylischen Monomeren wird ein Monomer verstanden, das als Homopolymer typischerweise ein Polymer ergibt, das wasserlöslich ist oder mindestens 10 Gewichtsprozent Wasser absorbieren kann. Analog wird unter einem hydrophoben vinylischen Monomeren ein Monomer verstanden, das als Homopolymer typischerweise ein Polymer ergibt, das wasserunlöslich ist und weniger als 10 Gewichtsprozent Wasser absorbieren kann.

Im allgemeinen reagieren zwischen etwa 0,01 und 80 Einheiten eines typischen vinylischen Comonomeren pro Einheit der Formel I bzw. III.

Falls ein vinylisches Comonomer verwendet wird, enthalten die vernetzten erfindungsgemässen Polymere vorzugsweise zwischen etwa 1 und 15 Prozent, besonders bevorzugt zwischen etwa 3 und 8 Prozent, Einheiten der Formel I bzw. III, bezogen auf die Anzahl von Hydroxylgruppen des Polyvinylalkohols, die mit etwa 0.1 bis 80 Einheiten des vinylischen Monomeren umgesetzt werden.

Der Anteil der vinylischen Comonomere, falls diese verwendet werden, beträgt vorzugsweise 0,5 bis 80 Einheiten pro Einheit der Formel I, insbesondere 1 bis 30 Einheiten vinylisches Comonomer pro Einheit der Formel I und besonders bevorzugt 5 bis 20 Einheiten pro Einheit der Formel I.

Es ist ferner bevorzugt, ein hydrophobes vinylisches Comonomer zu verwenden oder ein Gemisch eines hydrophoben vinylischen Comonomeren mit einem hydrophilen vinylischen Comonomeren, wobei dieses Gemisch wenigstens 50 Gewichtsprozent eines hydrophoben vinylischen Comonomeren enthält. Auf diese Weise lassen sich die mechanischen Eigenschaften des Polymeren verbessern, ohne dass der Wassergehalt wesentlich absinkt. Grundsätzlich gilt jedoch, dass sowohl konventionelle hydrophobe vinylische Comonomere als auch konventionelle hydrophile vinylische Comonomere für die Copolymerisation mit Polyvinylalkohol enthaltend Gruppen der Formel I geeignet sind.

Geeignete hydrophobe vinylische Comonomere umfassen, ohne dass diese Aufzählung abschliessend wäre, C₁-C₁₈-Alkylacrylate und -methacrylate, C₃-C₁₈-Alkylacrylamide und -methacrylamide, Acrylnitril, Methacrylnitril, Vinyl-C₁-C₁₈-alkanoate, C₂-C₁₈-Alkene, C₂-C₁₈-Haloalkene, Styrol, C₁-C₆-Alkylstyrol, Vinylalkylether, in denen der Alkylteil 1 bis 6 Kohlenstoffatome aufweist, C₂-C₁₀-Perfluoralkyl-acrylate und -methacrylate oder entsprechend partiell fluorierte Acrylate und Methacrylate, C₃-C₁₂-Perfluoralkyl-ethylthiocarbonylaminoethyl-acrylate und -methacrylate, Acryloxy und Methacryloxy-alkylsiloxane, N-Vinylcarbazol, C₁-C₁₂-Alkylester der Maleinsäure, Fumarsäure, Itaconsäure, Mesaconsäure und dergleichen. Bevorzugt sind z.B. C₁-C₄-Alkylester von vinylisch ungesättigten Carbonsäuren mit 3 bis 5 Kohlenstoffatomen oder Vinylester von Carbonsäuren mit bis zu 5 Kohlenstoffatomen.

Beispiele geeigneter hydrophober vinylischer Comonomere umfassen Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylbutyrat, Vinylvalerat, Styrol, Chloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethylmethacrylat, Isobornylmethacrylat, Trifluorethylmethacrylat, Hexafluorisopropylmethacrylat, Hexafluorbutylmethacrylat, Tris-trimethylsilyloxy-silylpropylmethacrylat, 3-Methacryloxypropylpentamethyldisiloxan und Bis(methacryloxypropyl)tetramethyldisiloxan.

Geeignete hydrophile vinylische Comonomere umfassen, ohne dass diese Aufzählung abschliessend wäre, durch Hydroxy substituierte Niederalkylacrylate und -methacrylate, Acrylamid, Methacrylamid, Niederalkylacrylamide und -methacrylamide, ethoxylierte Acrylate und Methacrylate, durch Hydroxy substituierte Niederalkylacrylamide und Methacrylamide, durch Hydroxy substituierte Niederalkylvinylether, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- oder 4-Vinylpyridin, Acrylsäure, Methacrylsäure, Amino- (wobei der Begriff "Amino" auch quaternäres Ammonium umfasst), Mononiederalkylamino- oder Diniederalkylamino-niederalkylacrylate und -methacrylate, Allylalkohol und dergleichen. Bevorzugt sind z.B. durch Hydroxy substituierte C₂-C₄-Alkyl(meth)-acrylate, fünf- bis siebengliedrige N-Vinyllactame, N,N-Di-C₁-C₄-alkyl(meth)acrylamide und vinylisch ungesättigte Carbonsäuren mit insgesamt 3 bis 5 Kohlenstoffatomen.

Beispiele geeigneter hydrophiler vinylischer Comonomere umfassen Hydroxyethylmethacrylat, Hydroxyethylacrylat, Acrylamid, Methacrylamid, Dimethylacrylamid, Allylalkohol, Vinylpyridin, Vinylpyrrolidon, Glycerinmethacrylat, N-(1,1-Dimethyl-3-oxobutyl)acrylamid, und dergleichen.

Bevorzugte hydrophobe vinylische Comonomere sind Methylmethacrylat und Vinylacetat.

Bevorzugte hydrophile vinylische Comonomere sind 2-Hydroxyethylmethacrylat, N-Vinylpyrrolidon und Acrylamid.

Die erfindungsgemässen Präpolymere können auf an sich bekannte Weise zu Formkörpern verarbeitet werden, insbesondere zu Kontaktlinsen, beispielsweise indem die Photovemetzung der erfindungsgemässen Präpolymere in einer geeigneten Kontaktlinsenform erfolgt. Ein weiterer Gegenstand der Erfindung ist daher auf Formkörper gerichtet, die im wesentlichen aus einem erfindungsgemässen Polymer bestehen. Weitere Beispiele für erfindungsgemässe Formkörper, neben Kontaktlinsen, sind biomedizinische oder speziell ophthalmische Formkörper, z.B. Intraokularlinsen, Augenverbände, Formkörper, die in der Chirurgie Verwendung finden können, wie Herzklappen, künstliche Arterien oder dergleichen, ferner Filme oder Membranen, z.B. Membranen für Diffusionskontrolle, photostrukturierbare Folien für Informationsspeicherung, oder Photoresistmaterialien, z.B. Membranen oder Formkörper für Aetzresist oder Siebdruckresist.

Eine spezielle Ausführungsform der Erfindung ist auf Kontaktlinsen gerichtet, die ein erfindungsgemässes Polymer umfassen oder im wesentlichen oder vollständig aus einem erfindungsgemässen Polymer bestehen. Derartige Kontaktlinsen weisen eine Palette ungewöhnlicher und äusserst vorteilhafter Eigenschaften auf. Unter diesen Eigenschaften sind beispielsweise ihre ausgezeichnete Verträglichkeit mit der menschlichen Cornea zu nennen, die auf einem ausgewogenen Verhältnis von Wassergehalt, Sauerstoffdurchlässigkeit und mechanischen Eigenschaften beruhen. Im übrigen sind die erfindungsgemässen Kontaktlinsen von hoher Formbeständigkeit. Auch nach Autoklavierung bei z.B. etwa 120 °C können keine Formveränderungen nachgewiesen werden.

Ferner kann hervorgehoben werden, dass die erfindungsgemässen Kontaktlinsen, d.h. insbesondere solche enthaltend ein Polymer aus einem Präpolymer enthaltend Einheiten der Formel I, auf gegenüber dem Stand der Technik sehr einfache und effiziente Weise hergestellt werden können. Dies beruht auf mehreren Faktoren. Einerseits sind die Ausgangsmaterialien kostengünstig zu beschaffen oder herzustellen. Zum zweiten bietet sich der Vorteil, dass die Präpolymere überraschenderweise stabil sind, so dass sie einer hochgradigen Reinigung unterzogen werden können. Zur Vernetzung kann daher ein Präpolymer eingesetzt werden, das praktisch keiner nachträglichen Reinigung mehr bedarf, wie insbesondere einer aufwendigen Extraktion von unpolymerisierten Bestandteilen. Ferner kann die Polymerisation in wässriger Lösung erfolgen, so dass ein nachträglicher Hydratationsschritt nicht erforderlich ist. Letztlich erfolgt die Photopolymerisation innerhalb kurzer Zeit, so dass der Herstellungsprozess der erfindungsgemässen Kontaktlinsen auch unter diesem Gesichtspunkt ausserordentlich wirtschaftlich gestaltet werden kann.

Alle die vorstehend genannten Vorteile gelten naturgemäss nicht nur für Kontaktlinsen, sondern auch für andere erfindungsgemässe Formkörper. Die Summe der verschiedenen vorteilhaften Aspekte bei der Herstellung der erfindungsgemässen Formkörper führt dazu, dass die erfindungsgemässen Formkörper besonders als Massenartikel geeignet sind, wie beispielsweise als Kontaktlinsen, die während einer kurzen Zeitspanne getragen werden und dann durch neue Linsen ersetzt werden.

Nachstehend werden Verfahren zur Herstellung der erfindungsgemässen Formkörper am Beispiel von Kontaktlinsen illustriert. Diese Verfahren sind aber auch für andere erfindungsgemässe Formkörper anwendbar.

Die erfindungsgemässen Kontaktlinsen können auf an sich bekannte Weise hergestellt werden, wie z.B. in einer konventionellen "spin-casting-mold", wie beispielsweise in US-A-3,408,429 beschrieben, oder nach dem sogenannten Full-Mold-Verfahren in einer statischen Form, wie z.B. in US-A-4,347,198 beschrieben.

Das bevorzugte Verfahren besteht darin, dass ein in Wasser lösliches Präpolymer, enthaltend vernetzbare Gruppen, in Lösung vernetzt wird. Die auf diese Weise durch Vernetzung erhältlichen Formkörper sind wasserunlöslich, aber in Wasser quellbar.

Im einzelnen ist dieses Verfahren zur Herstellung von Formkörpern, insbesondere von Kontaktlinsen, dadurch gekennzeichnet, dass es die folgenden Schritte umfasst:
a) Herstellen einer im wesentlichen wässrigen Lösung eines wasserlöslichen Präpolymeren, das vernetzbare Gruppen enthält,
b) Einbringen der erhaltenen Lösung in eine Form,
c) Auslösen der Vernetzung,
d) Oeffnen der Form, so dass der Formkörper aus der Form entnommen werden kann.

Soweit dies nicht nachstehend ausdrücklich ausgeschlossen ist, gelten die Ausführungen und Bevorzugungen, die vorstehend im Zusammenhang mit Präpolymeren enthaltend Einheiten der Formel I offenbart wurden, sowie die Ausführungen und Bevorzugungen, die im Zusammenhang mit den Verfahren zur Herstellung von Polymeren und Formkörpern, wie insbesondere Kontaktlinsen, aus jenen Präpolymeren offenbart wurden, auch im Zusammenhang mit dem im vorstehenden Absatz beschriebenen Verfahren umfassend die Schritte a), b), c) und d). Diese Aussage gilt für alle die Fälle, in denen die Ausführungen und Bevorzugungen im Zusammenhang mit Einheiten der Formel I enthaltenden Präpolymeren auf das im vorstehenden Absatz beschriebene Verfahren sinnvollerweise anwendbar sind.

Die Herstellung einer im wesentlichen wässrigen Lösung eines wasserlöslichen Präpolymeren, das vemetzbare Gruppen enthält, kann auf an sich bekannte Weise erfolgen, beispielsweise durch Synthese des Präpolymeren in einer im wesentlichen wässrigen Lösung oder durch Isolierung des Präpolymeren beispielsweise in reiner Form, d.h. frei von unerwünschten Bestandteilen, und Auflösen in einem im wesentlichen wässrigen Medium.

Unter dem Kriterium, dass das Präpolymer in Wasser löslich ist, wird erfindungsgemäss insbesondere verstanden, dass das Präpolymer in einer Konzentration von etwa 3 bis 90 Gewichtsprozent, vorzugsweise von etwa 5 bis 60 Gewichtsprozent, insbesondere von etwa 10 bis 60 Gewichtsprozent in einer im wesentlichen wässrigen Lösung löslich ist. Soweit im Einzelfall möglich, sind auch Präpolymerkonzentrationen von mehr als 90 % erfindungsgemäss umfasst. Besonders bevorzugt sind Konzentrationen des Präpolymeren in Lösung von etwa 15 bis etwa 50 Gewichtsprozent, insbesondere von etwa 15 bis etwa 40 Gewichtsprozent, z.B. von etwa 25 bis etwa 40 Gewichtsprozent.

Im wesentlichen wässrige Lösungen des Präpolymeren umfassen im Rahmen dieser Erfindung insbesondere Lösungen des Präpolymeren in Wasser, in wässrigen Salzlösungen, insbesondere in wässrigen Salzlösungen, die eine Osmolarität von etwa 200 bis 450 Milliosmol in 1000 ml (Einheit: mOsm/l) aufweisen, vorzugsweise eine Osmolarität von etwa 250 bis 350 mOsm/l, insbesondere von etwa 300 mOsm/l, oder in Gemischen von Wasser oder wässrigen Salzlösungen mit physiologisch verträglichen polaren organischen Lösungsmitteln, wie z.B. Glycerin. Bevorzugt sind Lösungen des Präpolymeren in Wasser oder in wässrigen Salzlösungen.

Bei den wässrigen Salzlösungen handelt es sich vorteilhafterweise um Lösungen von physiologisch verträglichen Salzen, wie im Bereich der Kontaktlinsenpflege üblichen Puffersalzen, z.B. Phosphatsalzen, oder im Bereich der Kontaktlinsenpflege üblichen Isotonisierungsmitteln, wie insbesondere Alkalihalogeniden, z.B. Natriumchlorid, oder um Lösungen von Gemischen davon. Ein Beispiel für eine besonders geeignete Salzlösung ist eine künstliche, vorzugsweise gepufferte Tränenflüssigkeit, die bezüglich pH-Wert und Osmolarität der natürlichen Tränenflüssigkeit angepasst ist, z.B. eine ungepufferte, vorzugsweise eine gepufferte, beispielsweise durch Phosphatpuffer gepufferte, Kochsalzlösung, deren Osmolarität und pH-Wert der Osmolarität und dem pH-Wert der menschlichen Tränenflüssigkeit entsprechen.

Bei den vorstehend definierten im wesentlichen wässrigen Lösungen des Präpolymeren handelt es sich vorzugsweise um reine Lösungen, d.h. um solche, die frei sind oder im wesentlichen frei sind von unerwünschten Bestandteilen. Besonders bevorzugt sind Lösungen des Präpolymeren in reinem Wasser oder in einer wie vorstehend beschriebenen künstlichen Tränenflüssigkeit.

Die Viskosität der Lösung des Präpolymeren in der im wesentlichen wässrigen Lösung ist über weite Grenzen unkritisch. Es sollte sich jedoch vorzugsweise um eine fliessfähige Lösung handeln, die spannungsfrei verformbar ist.

Das Molekulargewicht des Präpolymeren ist ebenfalls innerhalb weiter Grenzen nicht kritisch. Vorzugweise weist das Präpolymer jedoch ein Molekulargewicht von etwa 10.000 bis etwa 200.000 auf.

Das zum Einsatz kommende Präpolymer enthält vernetzbare Gruppen vorzugsweise in einer Menge von etwa 0,5 bis etwa 80 % Aequivalenten, bezogen auf die Aequivalente an Monomeren, die das polymere Grundgerüst bilden, insbesondere etwa 1 bis 50 %, weiter bevorzugt etwa 1 bis 25 %, bevorzugt etwa 2 bis 15 % und besonders bevorzugt etwa 3 bis 10 %. Ebenfalls besonders bevorzugt sind Anteile an vernetzbaren Gruppen von etwa 0,5 bis etwa 25 % Aequivalenten, insbesondere etwa 1 bis 15 % und besonders bevorzugt etwa 2 bis 12 %, bezogen auf die Aequivalente an Monomeren, die das polymere Grundgerüst bilden.

Wie bereits erwähnt, ist es essentiell für die Eignung eines Präpolymeren im Verfahren, dass es sich um ein vernetzbares Präpolymer handelt. Jedoch ist das Präpolymer unvernetzt oder zumindestens im wesentlichen unvernetzt, so dass es wasserlöslich ist.

Ferner ist das Präpolymer vorteilhafterweise im unvernetzten Zustand stabil, so dass es einer Reinigung unterzogen werden kann, wie sie vorstehend im Zusammenhang mit Verbindungen enthaltend Einheiten der Formel I beschrieben wurde. Die Präpolymere werden im Verfahren vorzugweise in Form reiner Lösungen eingesetzt. Die Präpolymere lassen sich in die Form reiner Lösungen z.B. wie nachstehend offenbart überführen.

Vorzugsweise lassen sich die im Verfahren zum Einsatz kommenden Präpolymere auf an sich bekannte Weise reinigen, beispielsweise durch Fällen mit organischen Lösungsmittel, wie Aceton, Filtration und Waschen, Extraktion in einem geeigneten Lösungsmittel, Dialyse oder Ultrafiltration, wobei die Ultrafiltration besonders bevorzugt ist. Durch diesen Reinigungsvorgang können die Präpolymere in äusserst reiner Form; z.B. als aufkonzentrierte wässrige Lösungen erhalten werden, die frei oder zumindest im wesentlichen frei sind von Reaktionsprodukten, wie Salzen, und von Ausgangsstoffen, wie z.B. nicht-polymeren Bestandteilen.

Das bevorzugte Reinigungsverfahren der im Verfahren zum Einsatz kommenden Präpolymere, eine Ultrafiltration, kann auf an sich bekannte Weise durchgeführt werden. Dabei besteht die Möglichkeit, die Ultrafiltration wiederholt durchzuführen, beispielsweise zwei- bis zehnmal. Alternativ dazu kann die Ultrafiltration auch kontinuierlich durchgeführt werden, bis der gewünschte Reinheitsgrad erreicht ist. Der gewünschte Reinheitsgrad kann grundsätzlich beliebig hoch gewählt werden. Ein geeignetes Mass für den Reinheitsgrad ist z.B. der Kochsalzgehalt der Lösung, der sich auf bekannte Weise einfach ermitteln lässt.

In einer bevorzugten Ausführungsform des Verfahrens wird im Schritt a) eine im wesentlichen wässrige Lösung des Präpolymeren hergestellt und weiter verwendet, die im wesentlichen frei ist von unerwünschten Bestandteilen, wie z.B. frei von monomeren, oligomeren oder polymeren Ausgangsverbindungen, die zur Herstellung des Präpolymeren verwendet wurden und/oder frei von Nebenprodukten, die bei der Herstellung des Präpolymeren entstanden sind. Bei dieser im wesentlichen wässrigen Lösung handelt es sich besonders bevorzugt um eine rein wässrige Lösung oder um eine Lösung in einer wie vorstehend beschriebenen künstlichen Tränenflüssigkeit. Es ist ferner bevorzugt, das Verfahren ohne Zusatz eines Comonomeren, beispielsweise eines vinylischen Comonomeren durchzuführen.

Aufgrund einer der im vorstehenden Absatz genannten Massnahmen und insbesondere aufgrund einer Kombination der im vorstehenden Absatz genannten Massnahmen wird im Verfahren eine Lösung des Präpolymeren verwendet, die keine oder im wesentlichen keine unerwünschten Bestandteile enthält, die nach einer Vernetzung extrahiert werden müssten. Es ist daher ein besonderes Merkmal dieser bevorzugten Ausführungsform des Verfahrens, dass im Anschluss an die Vernetzung auf eine Extraktion unerwünschter Bestandteile verzichtet werden kann.

Das Verfahren wird daher vorzugsweise so durchgeführt, dass die im wesentlichen wässrige Lösung des wasserlöslichen Präpolymeren, das vernetzbare Gruppen enthält, frei ist oder im wesentlichen frei ist von unerwünschten Bestandteilen, wie insbesondere von monomeren, oligomeren oder polymeren Ausgangsverbindungen, die zur Herstellung des Präpolymeren verwendet wurden, oder von Nebenprodukten, die bei der Herstellung des Präpolymeren entstanden sind, und/oder dass die Lösung ohne Zusatz eines Comonomeren verwendet wird, so dass im weiteren Verlauf des Verfahrens auf eine Extraktion irgendwelcher unerwünschter Bestandteile verzichtet werden kann.

Ein Zusatz, der der Lösung des Präpolymeren gegebenenfalls zugegeben wird, ist ein Initiator für die Vernetzung, soweit für die Vernetzung der vemetzbaren Gruppen ein Initiator erforderlich ist. Dies kann insbesondere dann der Fall sein, wenn die Vernetzung durch Photovernetzung erfolgt, welche im erfindungsgemässen Verfahren bevorzugt ist.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, oder kommerzielle Produkte wie verschiedene Darocure-Typen oder Irgacure-Typen, z.B. Darocure 1173 oder Irgacure 2959, genannt werden.

Für das Einbringen der erhaltenen Lösung in eine Form können an sich bekannte Verfahren eingesetzt werden, wie insbesondere konventionelles Eindosieren, z.B. durch Eintropfen.

Die Vernetzung kann in der Form z.B. durch aktinische Strahlung, wie z.B. UV-Licht, oder ionisierende Strahlung, wie z.B. Gammastrahlung, Elektronenstrahlung oder Röntgenstrahlung, ausgelöst werden. Die Vernetzung kann gegebenenfalls auch thermisch ausgelöst werden. Hervorzuheben ist, dass die Vernetzung erfindungsgemäss in sehr kurzer Zeit erfolgen kann, beispielsweise in weniger als fünf Minuten, bevorzugt in weniger als einer Minute, insbesondere in bis zu 30 Sekunden, besonders bevorzugt wie in den Beispielen beschrieben.

Das Oeffnen der Form, so dass der Formkörper aus der Form entnommen werden kann, kann auf an sich bekannte Weise erfolgen.

Da die Lösung des Präpolymeren vorzugsweise keine unerwünschten niedermolekularen Bestandteile enthält, enthält auch das vernetzte Produkt keine derartigen Bestandteile.

Daher entfällt die Notwendigkeit einer nachträglichen Extraktion. Da die Vernetzung in einer im wesentlichen wässrigen Lösung durchgeführt wird, entfällt die Notwendigkeit einer nachträglichen Hydratation. Unter anderem diese beiden Vorteile führen dazu, dass eine aufwendige Nachbehandlung der erhaltenen Formkörper, insbesondere Kontaktlinsen, entfällt. Die gemäss dem Verfahren erhältlichen Kontaktlinsen zeichnen sich daher gemäss einer vorteilhaften Ausführungsform dadurch aus, dass sie ohne Extraktion für ihre bestimmungsgemässe Verwendung geeignet sind. Unter bestimmungsgemässer Verwendung wird in diesem Zusammenhang insbesondere verstanden, dass die Kontaktlinsen in das menschliche Auge eingesetzt werden können. Die gemäss dem Verfahren erhältlichen Kontaktlinsen zeichnen sich gemäss einer vorteilhaften Ausführungsform ferner dadurch aus, dass sie ohne Hydratation für ihre bestimmungsgemässe Verwendung geeignet sind.

Das Verfahren erweist sich daher als ausserordentlich gut geeignet zur rationellen Herstellung einer hohen Anzahl von Formkörpern, wie Kontaktlinsen, in kurzer Zeit. Die gemäss dem Verfahren erhältlichen Kontaktlinsen weisen gegenüber den aus dem Stand der Technik bekannten Kontaktlinsen unter anderem die Vorteile auf, dass sie ohne nachträgliche Behandlungsschritte, wie Extraktion oder Hydratation, bestimmungsgemäss verwendet werden können.

In den nachfolgenden Beispielen sind Mengenangeben, falls nicht ausdrücklich anders angegeben, Gewichtsangaben, Temperaturen werden in Grad Celsius angegeben. Die Beispiele sind nicht geeignet, die Erfindung in irgendeiner Weise, beispielsweise auf den Umfang der Beispiele, zu beschränken.

Beispiel 1a): Zu 105,14 Teilen Aminoacetaldehyd-dimethylacetal und 101,2 Teilen Triethylamin in 200 Teilen Dichlormethan werden unter Eiskühlung 104,5 Teile Methacryloylchlorid, gelöst in 105 Teilen Dichlormethan, bei maximal 15°C während 4 Stunden zugetropft. Nach beendeter Reaktion wird die Dichlormethanphase mit 200 Teilen Wasser, dann mit 200 Teilen 1N HCl-Lösung, dann zweimal mit 200 Teilen Wasser gewaschen. Nach Trocknen mit wasserfreiem Magnesiumsulfat wird die Dichlormethanphase eingedampft und mit 0,1 %, bezogen auf das Reaktionsprodukt, 2,6-Di-tert.butyl-p-kresol stabilisiert. Nach Destillation bei 90°C/10⁻³ mbar erhält man 112 g Methacrylamidoacetaldehyd-dimethylacetal als farblose Flüssigkeit, Siedepunkt 92°C/10⁻³ mbar (65 % Ausbeute).

Beispiel 1b): 52,6 g Aminoacetaldehyd-dimethylacetal werden in 150 ml deionisiertem Wasser gelöst und unter Eiskühlung auf 5°C abgekühlt. Anschliessend werden gleichzeitig 50 ml Methacrylsäurechlorid und 50 ml 30 %-ige Natronlauge während 40 Minuten so zugegeben, dass der pH-Wert bei 10 bleibt und die Temperatur nicht über 20°C steigt. Nach beendeter Zugabe wird mittels Gaschromatographie der verbliebene Gehalt an Aminoacetaldehyd-dimethylacetal zu 0,18 % bestimmt. Durch weitere Zugabe von 2,2 ml Methacrylsäurechlorid und 2,0 ml 30 %-ige Natronlauge wird das Amin vollständig umgesetzt. Anschliessend wird die Lösung mit 1N Salzsäure neutralisiert (pH = 7). Die wässrige Phase wird mit 50 ml Petrolether extrahiert und mit Wasser gewaschen. Die Petroletherphase enthält 3,4 g Nebenprodukt. Die Wasserphasen werden vereinigt und ergeben 402,8 g einer 20,6 %-igen Lösung von Methacrylamidoacetaldehyd-dimethylacetal. Das Produkt ist gemäss Gaschromatogramm 98,2 %-ig.

Beispiel 2: 10 Teile Polyvinylalkohol mit einem Molekulargewicht von 22000 und einem Verseifungsgrad von 97,5 - 99,5 % werden in 90 Teilen Wasser gelöst, mit 2,5 Teilen Methacrylamidoacetaldehyd-dimethylacetal versetzt und mit 10 Teilen konzentrierter Salzsäure angesäuert. Die Lösung wird mit 0,02 Teilen 2,6-Di-tert.-butyl-p-kresol stabilisiert. Nach 20-stündigem Rühren bei Raumtemperatur wird die Lösung mit 10 %-iger Natronlauge auf pH 7 eingestellt und dann siebenmal über eine 3kD-Membran ultrafiltriert (Verhältnis 1:3). Nach Einengen erhält man eine 18.8 %-ige wässrige Lösung von Methacrylamidoacetaldehydo-1,3-acetal von Polyvinylalkohol mit einer Viskosität von 2240 cP bei 25 °C.

Beispiel 3: 10 Teile der gemäss Beispiel 2 erhaltenen Lösung des Methacrylamidoacetaldehydo-1,3-acetals von Polyvinylalkohol werden photochemisch vernetzt, indem sie mit 0,034 Teilen Darocure 1173 (CIBA-GEIGY) versetzt werden. Dieses Gemisch wird als 100 Mikron dicke Schicht zwischen zwei Glasplatten mit 200 Impulsen eines 5000 Watt Belichtungsgerätes der Firma Staub belichtet. Es resultiert eine feste transparente Folie mit einem Feststoffgehalt von 31 %.

Beispiel 4: 110 g Polyvinylalkohol (Moviol 4-88, Hoechst) werden in 440 g deionisiertem Wasser bei 90°C gelöst und auf 22°C abgekühlt. 100,15 g einer 20,6 %-igen wässrigen Lösung von Methacrylamidoacetaldehyd-dimethylacetal, 38,5 g konz. Salzsäure (37 % p.a., Merck) und 44,7 g deionisiertes Wasser werden dazugegeben. Die Mischung wird bei Raumtemperatur während 22 Stunden gerührt und dann mit einer 5 %-igen NaOH-Lösung auf pH = 7,0 eingestellt. Die Lösung wird mit deionisiertem Wasser auf 3 Liter verdünnt, filtriert und durch eine 1-KD-Omega-Membran der Firma Filtron ultrafiltriert. Nachdem das dreifache Probenvolumen permeiert hat, wird die Lösung aufkonzentriert. Man erhält 660 g einer 17,9 %-igen Lösung des Methacrylamidoacetaldehydo-1,3-acetals von Polyvinylalkohol mit einer Viskosität von 210 cp. Die inhärente Viskosität des Polymeren beträgt 0,319. Der Stickstoffgehalt beträgt 0,96 %. Gemäss NMR-Untersuchung sind 11 Mol-% der OH-Gruppen acetalisiert und 5 Mol-% der OH-Gruppen acetyliert. Durch Aufkonzentrieren der wässrigen Polymerlösung unter reduziertem Druck und Luftzug erhält man eine 30,8 %-ige Lösung mit einer Viskosität von 3699 cp.

Beispiel 5: 133,3 g einer 15 %-igen Polyvinylalkohollösung (Moviol 4-88, Hoechst) werden mit 66,6 g deionisiertem Wasser, 3,3 g monomerem 4-Methacrylamidobutyraldehyddiethylacetal und 20,0 g konz. Salzsäure (37 % p.a., Merck) versetzt und bei Raumtemperatur 8 Stunden gerührt. Die Lösung wird anschliessend mit 5 %-iger Natronlauge auf pH = 7 eingestellt. Nach Ultrafiltration dieser Lösung über eine 3 KD-Omega-Membran der Firma Filtron, wobei der Natriumchloridgehalt der Polymerlösung von 2,07 % auf 0,04 % reduziert wird, resultiert eine 20 %-ige Polymerlösung des Methacrylamidobutyraldehydo-1,3-acetals von Polyvinylalkohol mit einer Viskosität von 400 cp. Die inhärente Viskosität des Polymeren beträgt 0,332. Der Stickstoffgehalt beträgt 0,41 %. Gemäss NMR-Untersuchung sind 7,5 Mol-% der OH-Gruppen mit Acetalgruppen beladen, und 7,3 Mol-% der OH-Gruppen sind mit Acetatgruppen beladen.

Beispiel 6: 200 g einer 10 %-igen Polyvinylalkohollösung (Moviol 4-88, Hoechst) werden mit 2,4 g (14,8 mmol) Aminobutyraldehyd-diethylacetal (Fluka) und 20 g konz. Salzsäure (37 % p.a., Merck) versetzt. Die Lösung wird während 48 Stunden bei Raumtemperatur gerührt und anschliessend mit 10 %-iger Natronlauge neutralisiert. Die Lösung wird auf 400 ml verdünnt. 200 ml dieser Lösung werden gemäss Beispiel 7 weiter verarbeitet. Die übrigen 200 ml dieser Lösung werden mit 0,85 g (8,1 mmol) Methacrylsäurechlorid (Fluka) versetzt, und der pH-Wert wird mit 2N Natronlauge auf pH = 10 gehalten. Nach 30 Minuten bei Raumtemperatur wird der pH auf 7,0 eingestellt und die Lösung über eine 3-KD-Omega-Membran der Firma Filtron analog Beispiel 5 gereinigt. Nach Aufkonzentrieren resultiert eine 27,6 %-ige Polymerlösung des Methacrylamidobutyraldehydo-1,3-acetals von Polyvinylalkohol mit einer Viskosität von 2920 cp. Die inhärente Viskosität des Polymeren beträgt 0,435. Der Stickstoffgehalt beträgt 0,59 %.

Beispiel 7: 200 ml der Polymerlösung von Beispiel 6 werden mit 1,3 g (8,5 mmol) 2-Isocyanatoethylmethacrylat versetzt, und mit 2N Natronlauge wird der pH-Wert auf 10 gehalten. Nach 15 Minuten bei Raumtemperatur wird die Lösung mit 2N Salzsäure neutralisiert und analog wie in Beispiel 6 ultrafiltriert. Nach Konzentrieren resultiert eine 27,1 %-ige Polymerlösung des 4-(2-Methacryloylethyl-ureido)butyraldehydo-1,3-acetals von Polyvinylalkohol mit einer Viskosität von 2320 cp. Die inhärente Viskosität des Polymeren beträgt 0,390. Der Stickstoffgehalt beträgt 1,9 %.

Beispiel 8: Die 30,8 %-ige Polymerlösung gemäss Beispiel 4 mit einer Viskosität von etwa 3600 cp wird mit 0,7 % Darocure 1173 (bezogen auf den Gehalt an Polymer) versetzt. Die Lösung wird in eine transparente Kontaktlinsenform aus Polypropylen gefüllt, die Form wird geschlossen. Mittels einer 200 Watt Oriel UV-Lampe wird die Lösung während 6 Sekunden aus einem Abstand von 18 cm belichtet. Die Form wird geöffnet, und die fertige Kontaktlinse kann entfernt werden. Die Kontaktlinse ist transparent und weist einen Wassergehalt von 61 % auf. Der Modulus beträgt 0,9 mPa, die Bruchdehnung 50 %. Die Kontaktlinse wird bei 121 °C während 40 Minuten autoklaviert. An einer so behandelten Kontaktlinsen können keine Formveränderungen nachgewiesen werden.

Beispiel 9:10,00 g einer 27,1 %-igen Polymerlösung gemäss Beispiel 7 werden mit 0,0268 g Darocure 1173 (0,7 % bezogen auf den Polymergehalt) und 0,922 g Methylmethacrylat versetzt. Nach Zugabe von 2,3 g Methanol erhält man eine klare Lösung. Diese Lösung wird analog wie in Beispiel 8 mit einer 200 Watt Oriellampe für eine Dauer von 14 Sekunden belichtet. Man erhält eine transparente Kontaktlinse mit einem Wassergehalt von 70,4 %.

Beispiel 10: 12,82 g einer 24,16 %-igen Lösung des Präpolymeren von Beispiel 4 werden mit 1,04 g Acrylamid und 0,03 g Darocure 1173 versetzt. Die klare Lösung wird anschliessend analog zu Beispiel 8 mit einer 200 Watt Oriellampe während 14 Sekunden belichtet. Man erhält eine Kontaktlinse mit einem Wassergehalt von 64,4 %.

Beispiel 11: In einem 3-Liter-Reaktor mit Rührer und Kühlung werden 220 g (5,5 Mol) Natriumhydroxid in 300 g Wasser und 700 g Eis gelöst. Die Natronlauge wird auf 10°C gekühlt, es werden 526 g (5,0 Mol) Aminoacetaldehyd-dimethylacetal und *50* mg 4-Hydroxy-2,2,6,6-tetramethyl-piperidin-1-oxyl (Radikalinhibitor) zugegeben. Zu dieser Lösung werden langsam während 3,5 Stunden bei 10°C 548,6 g (5,5 Mol) Methacrylsäurechlorid zugegeben. Nach beendeter Zugabe sinkt der pH-Wert langsam auf 7,2, und es kann mittels GC kein Amin mehr nachgewiesen werden. Die Reaktionsmischung wird mit 500 ml Petrolether extrahiert, um Verunreinigungen zu entfernen, die Wasserphase wird mit Kochsalz gesättigt und dreimal mit 500 ml tert.-Butylmethylether extrahiert. Die organische Phase wird mit Magnesiumsulfat getrocknet, filtriert und am Rotationsverdampfer eingeengt. Die erhaltenen 882,2 g gelbliches Oel werden langsam mittels eines Ultraturax in 2000 ml Petrolether bei -10°C eingerührt. Das Produkt kristallisiert, wird abfiltriert und getrocknet. Erhalten werden 713,8 g Methacrylamidoacetaldehyd-dimethylacetal (86 % d.Th.), Schmelzpunkt 30-32°C, nach GC ist das Produkt 99,7 %ig.

Beispiel 12: In einem 1-Liter-Reaktor mit Rührer und Kühlung werden 40 g (1.0 Mol) Natriumhydroxid in 100 g Wasser und 200 g Eis gelöst. Die Natronlauge wird auf 10°C gekühlt, es werden 105,1 g (1,0 Mol) Aminoacetaldehyd-dimethylacetal und 10 mg des Inhibitors 4-Hydroxy-2,2,6,6-tetramethyl-piperidin-1-oxyl zugegeben. Zu dieser Lösung werden langsam während 2 Stunden bei 10°C 99,5 g (1,1 Mol) Acrylsäurchlorid zugegeben. Der pH-Wert sinkt langsam und wird am Schluss auf pH = 7 eingestellt. Gemäss GC ist kein Amin mehr vorhanden. Die Reaktionsmischung wird mit Kochsalz gesättigt und dreimal mit 200 ml tert.-Butylmethylether extrahiert. Die organische Phase wird getrocknet, filtriert und am Rotationsverdampfer eingeengt. Das erhaltene Oel wird dreimal mit Petrolether extrahiert und anschliessend erneut am Rotationsverdampfer getrocknet. Man erhält 130 g Acrylamidoacetaldehyd-dimethylacetal (81 % d.Th.) als Oel, nach GC ist das Produkt 99 %ig.

Beispiel 13: Allgemeine Herstellungsmethode für die Reaktion von PVA mit Acetalen oder Aldehyden zur Herstellung von Umsetzungsprodukten mit hohem Acetatgehalt

In einem 2-Liter-Doppelmantelreaktor mit Rührer und Thermometer werden 300 g PVA (z.B. Moviol Hoechst 4-88) vorgelegt und 800 g deionisiertes Wasser zugegeben und unter Rühren auf 95°C erwärmt. Nach einer Stunde ist alles klar gelöst und die Lösung wird auf 20°C abgekühlt. Es werden 27 g (0,155 Mol) Methacrylamidoacetaldehyd-dimethylacetal (aus Beispiel 11), 440 g Essigsäure, 100 g konz. Salzsäure (37 %) und soviel deionisiertes Wasser zugegeben, dass total 2000 g Reaktionslösung entstehen (im konkreten Fall: 333 g). Die Mischung wird während 20 Stunden bei 20°C gerührt, Die Aenderung des Acetatgehaltes kann durch Titration der Essigsäure bestimmt werden.

Die Isolierung kann mittels Ultrafiltration erfolgen: Das Reaktionsgemisch wird auf 15°C abgekühlt und mit wässriger NaOH (5 %) auf pH 3,6 gestellt. Die Polymerlösung wird über ein 0,45 µm Filter filtriert und mittels Ultrafiltration gereinigt. Die Ultrafiltration erfolgt mittels einer 1KD Omega Membran von Filtron. Es wird bis zu einem Restgehalt an Kochsalz von 0,004 % ultrafiltriert. Vor der Beendigung der Reinigung wird die Lösung mit 0,1 N Natronlauge auf pH = 7 eingestellt. Nach Aufkonzentrieren resultieren 1995 g einer 14,54 % Polymerlösung (92 % d. Th); N-Gehalt (Kjendahl - Bestimmung) = 0,683 %, Acetatgehalt (bestimmt durch Hydrolyse) = 2,34 mAe/g, inhärente Viskosität: 0,310, Doppelbindungen: 0,5 mAe/g (bestimmt durch Mikrohydrierung), freie Hydroxygruppen (bestimmt durch Reacetylierung): 15,3 mAe/g, GPC - Analyse (in Wasser): Mw = 19101, Mn = 7522, Mw/Mn = 2,54.

Die Isolierung kann auch mittels Fällung erfolgen: Das Reaktionsgemisch wird mit Triethylamin auf pH 3.6 gestellt und in Aceton im Verhältnis 1:10 gefällt. Der Niederschlag wird abgetrennt, zweimal mit Ethanol und einmal mit Aceton dispergiert und getrocknet. Das so erhaltene Produkt hat die gleichen Eigenschaften wie das durch Ultrafiltration erhaltene.

Beispiel 14: Allgemeine Herstellungsmethode für die Reaktion von PVA mit Acetalen oder Aldehyden zur Herstellung von Umsetzungsprodukten mit niedrigem Acetatgehalt

In einem 2-Liter-Doppelmantelreaktor mit Rührer und Thermometer werden 300 g PVA (z.B. Moviol Hoechst 4-88) vorgelegt und 800 g deionisiertes Wasser zugegeben und unter Rühren auf 95°C erwärmt. Nach einer Stunde ist alles klar gelöst und die Lösung wird auf 20°C abgekühlt. Es werden 27 g (0,155 Mol) Methacrylamidoacetaldehyd-dimethylacetal (aus Beispiel 11), 200 g konz. Salzsäure (37 %) und soviel deionisiertes Wasser zugegeben, dass total 2000 g Reaktionslösung entstehen (im konkreten Fall: 673 g). Die Mischung wird bei 20°C gerührt. Nach 20 Stunden wird eine Probe der Reaktionslösung mit NaOH titriert und der Hydrolysegrad des PVA bestimmt: HCl = 1.034 mAe/g, Essigsäure = 0,265 mAe/g entsprechend 3,5 Mol% Restacetat. Das Reaktionsgemisch wird noch zwei Stunden bei 25 °C weitergerührt und erneut titriert: HCl = 1,034 mAe/g, Essigsäure = 0,277 mAe/g, entsprechend 2,93 Mol % Restacetat.

Die Isolierung kann mittels Ultrafiltration erfolgen: Das Reaktionsgemisch wird auf 15°C abgekühlt und mit wässriger NaOH (5 %) auf pH 7 gestellt. Die Polymerlösung wird über ein 0,45 µm Filter filtriert und mittels Ultrafiltration gereinigt. Die Ultrafiltration erfolgt mittels einer 1KD Omega Membran von Filtron. Es wird bis zu einem Restgehalt an Kochsalz von 0,002 % ultrafiltriert. Es resultieren 1800 g einer 14,02 % Polymerlösung (86 % d. Th); N-Gehalt (Kjendahl - Bestimmung) = 0,741 %, Acetatgehalt (nach Titration) = 0,605 mAe/g entsprechend 2,91 Mol %, inhärente Viskosität: 0,327, Doppelbindungen: 0,61 mAe/g (bestimmt durch Mikrohydrierung), freie Hydroxygruppen (bestimmt durch Reacetylierung): 18,13 mAe/g, GPC - Analyse (in Wasser): Mw = 22007, Mn = 9743, Mw/Mn = 2,26.

Die Isolierung kann auch mittels Fällung erfolgen: Das Reaktionsgemisch wird mit Triethylamin auf pH 3.6 gestellt und in Aceton im Verhältnis 1:10 gefällt. Der Niederschlag wird abgetrennt, zweimal mit Ethanol und einmal mit Aceton dispergiert und getrocknet. Das so erhaltene Produkt ist mit dem durch Ultrafiltration erhaltenen vergleichbar.

Beispiel 15: Herstellung von Kontaktlinsen

Eine 30 %ige Lösung der nachstehend aufgeführten Polymere wird mit 0,3 % (bezogen auf Polymergehalt) des Photoinitiators Irgacure 2959 versetzt. In einer transparenten Kontaktlinsenform aus Polypropylen werden die Lösungen mittels einer 200 W Oriel UV-Lampe (150 mW/cm²) während 6 Sekunden belichtet. Die Linsen werden aus der Form entfernt. Sie sind transparent und zeigen die nachstehend aufgeführten Eigenschaften.

Beispiele 15 a) bis 15 j): Umsetzungsprodukte von PVA (4-88) Moviol Hoechst, 12 Mol% Restacetat, Mw = 19115, Mn = 7887, Mw/Mn = 2,43, inhärente Viskosität = 0,358, gemäss Herstellungsmethode von Beispiel 13 bzw. 14, Isolierung durch Ultrafiltration:
15 a): 30 g Acetal aus Beispiel 11, Herstellungsmethode gemäss Beispiel 13, Essigsäurezusatz: 700 g, inhärente Viskosität: 0,278,
   - Präpolymerdaten (Sol):: N-Gehalt: 1,34 %, Acetalgehalt: 0,96 mAe/g, Acetatgehalt: 19 Mol %, Mw: 17412, Mn: 6273, Mw/Mn: 2,77,
   - Feststoffgehalt:: 30 % im Solzustand führen zu 38,4 % im Gelzustand.
15 b): 24 g Acetal aus Beispiel 11, Herstellungsmethode gemäss Beispiel 13, Essigsäurezusatz: 300 g, inhärente Viskosität: 0,329,
   - Präpolymerdaten (Sol):: N-Gehalt: 0,64 %, Acetalgehalt: 0,45 mAe/g, Acetatgehalt: 9 Mol %,
   - Feststoffgehalt:: 30 % im Solzustand führen zu 29,5 % im Gelzustand.
15 c): 24 g Acetal aus Beispiel 11, Herstellungsmethode gemäss Beispiel 13, Essigsäurezusatz: 700 g, inhärente Viskosität: 0,331,
   - Präpolymerdaten (Sol):: N-Gehalt: 0,58 %, Acetalgehalt: 0,42 mAe/g, Acetatgehalt: 17,5 Mol %, Mw: 18861, Mn: 8051, Mw/Mn: 2,34,
   - Feststoffgehalt:: 30 % im Solzustand führen zu 27,6 % im Gelzustand.
15 d): 30 g Acetal aus Beispiel 11, Herstellungsmethode gemäss Beispiel 13, Essigsäurezusatz: 500 g, inhärente Viskosität: 0,327,
   - Präpolymerdaten (Sol):: N-Gehalt: 0,753 %, Acetalgehalt: 0,54 mAe/g, Acetatgehalt: 12,5 Mol %, Mw: 19463, Mn: 8064, Mw/Mn: 2,41,
   - Feststoffgehalt:: 30 % im Solzustand führen zu 30,0 % im Gelzustand.
15 e): 56 g Acetal aus Beispiel 11, Herstellungsmethode gemäss Beispiel 13, Essigsäurezusatz: 1000 g,
   - Präpolymerdaten (Sol):: N-Gehalt: 1,208 %, Acetalgehalt: 0,86 mAe/g, Acetatgehalt: 26 Mol %,
   - Feststoffgehalt:: 30 % im Solzustand führen zu 36,7 % im Gelzustand.
15 f): 24 g Acetal aus Beispiel 11, Herstellungsmethode gemäss Beispiel 14, kein Essigsäurezusatz, inhärente Viskosität: 0,321,
   - Präpolymerdaten (Sol):: N-Gehalt: 0,659 %, Acetalgehalt: 0,46 mAe/g, Acetatgehalt: 5,9 Mol %, Mw: 27121, Mn: 6490, Mw/Mn: 4,18,
   - Feststoffgehalt:: 30 % im Solzustand führen zu 30,0 % im Gelzustand.
15 g): 48 g Acetal aus Beispiel 11, Herstellungsmethode gemäss Beispiel 14, kein Essigsäurezusatz,
   - Präpolymerdaten (Sol):: N-Gehalt: 1,23 %, Acetalgehalt: 0,88 mAe/g, Acetatgehalt: 6,6 Mol %, Mw: 18833, Mn: 7047, Mw/Mn: 2,66,
   - Feststoffgehalt:: 30 % im Solzustand führen zu 36,7 % im Gelzustand.
15 h): 27 g Acetal aus Beispiel 11, Herstellungsmethode gemäss Beispiel 14, kein Essigsäurezusatz, inhärente Viskosität: 0,31,
   - Präpolymerdaten (Sol):: N-Gehalt: 0,638 %, Acetalgehalt: 0,53 mAe/g, Acetatgehalt: 2,9 Mol %, Mw: 19101, Mn: 7522, Mw/Mn: 2,54,
   - Feststoffgehalt:: 30 % im Solzustand führen zu 30,0 % im Gelzustand.
15 i): 31 g Acetal aus Beispiel 12, Herstellungsmethode gemäss Beispiel 14, kein Essigsäurezusatz,
   - Präpolymerdaten (Sol):: N-Gehalt: 1,41 %, Acetalgehalt: 1,00 mAe/g, Acetatgehalt: 6,2 Mol %,
   - Feststoffgehalt:: 30 % im Solzustand führen zu 37,0 % im Gelzustand.
15 j): 23 g Acetal aus Beispiel 12, Herstellungsmethode gemäss Beispiel 14, kein Essigsäurezusatz, inhärente Viskosität: 0,352,
   - Präpolymerdaten (Sol):: N-Gehalt: 0,62 %, Acetalgehalt: 0,44 mAe/g, Acetatgehalt: 5,8 Mol %,

   Beispiele 15 k) bis 15l): Umsetzungsprodukte von PVA (8-88) Moviol Hoechst, 12 Mol% Restacetat, Mw = 49000, Mn = 19600, Mw/Mn = 2,5, inhärente Viskosität = 0,546, gemäss Herstellungsmethode von Beispiel 13, Isolierung durch Ultrafiltration:
15 k): 53 g Acetal aus Beispiel 11, Essigsäurezusatz: 400 g,
   - Präpolymerdaten (Sol):: N-Gehalt: 1,31 %, Acetalgehalt: 0,94 mAe/g, Acetatgehalt: 8,9 Mol %,
15 l): 30 g Acetal aus Beispiel 11, Essigsäurezusatz: 490 g, inhärente Viskosität: 0,495,
   - Präpolymerdaten (Sol):: N-Gehalt: 0,747 %, Acetalgehalt: 0,54 mAe/g, Acetatgehalt: 13,6 Mol %, Mw: 44334, Mn: 17293, Mw/Mn: 2,56,
   - Feststoffgehalt:: 30 % im Solzustand führen zu 30,5 % im Gelzustand.

## Patentansprüche

1. Ein Präpolymer, bei dem es sich um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel I enthält, 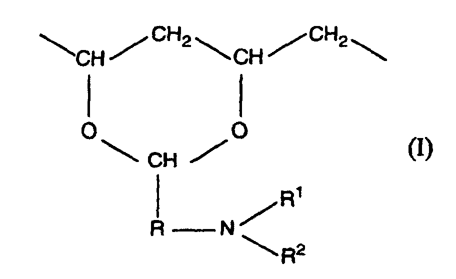 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

2. Ein Präpolymer gemäss Anspruch 1, worin R² für einen olefinisch ungesättigten Acylrest der Formel R³-CO- steht, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

3. Ein Präpolymer gemäss Anspruch 2, worin R³ für Alkenyl mit 2 bis 8 Kohlenstoffatomen steht.

4. Ein Präpolymer gemäss Anspruch 1, worin der Rest R² für einen Rest der Formel II steht,
-CO-NH-(R⁴-NH-CO-O)_{q}-R⁵-O-CO-R³ (II)
worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

5. Ein Präpolymer gemäss Anspruch 1, wobei es sich um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel III enthält, 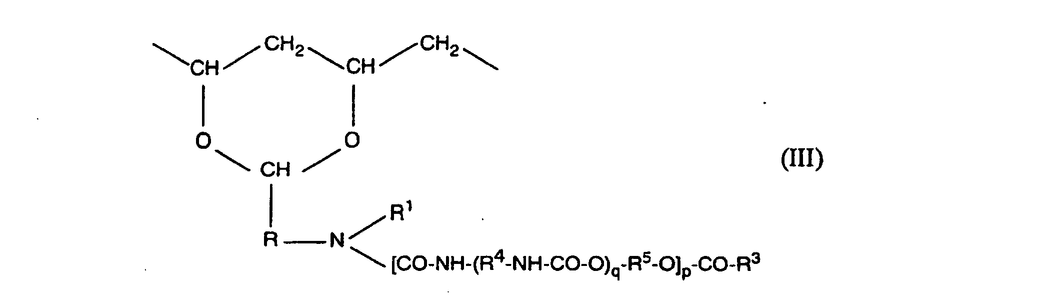 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

6. Ein Präpolymer gemäss Anspruch 5, worin R für Niederalkylen mit bis zu 6 Kohlenstoffatomen steht, p Null bedeutet und R³ Alkenyl mit 2 bis 8 Kohlenstoffatomen bedeutet.

7. Ein Präpolymer gemäss Anspruch 5, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

8. Ein Präpolymer gemäss Anspruch 5, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

9. Ein Präpolymer gemäss Anspruch 1, bei dem es sich um ein Derivat eines Polyvinylalkohols mit einem Molekulargewicht von mindestens etwa 2000 handelt, das von etwa 1 bis etwa 15 %, bezogen auf die Anzahl Hydroxylgruppen des Polyvinylalkohols, Einheiten der Formel I enthält.

10. Ein Polymer, erhältlich durch Photovemetzung eines Präpolymeren gemäss Anspruch 1, in Abwesenheit oder Anwesenheit eines zusätzlichen vinylischen Comonomeren.

11. Ein Polymer gemäss Anspruch 10, erhalten durch Photovernetzung eines Präpolymeren gemäss Anspruch 1 in im wesentlichen reiner Form, in Abwesenheit oder Anwesenheit eines zusätzlichen vinylischen Comonomeren.

12. Ein Polymer gemäss Anspruch 11, wobei das Präpolymer durch ein- oder mehrmalige Ultrafiltration in eine im wesentlichen reine Form übergeführt wird.

13. Ein Polymer gemäss Anspruch 10, erhältlich durch Photovernetzung eines Präpolymeren gemäss Anspruch 1 in Abwesenheit eines zusätzlichen vinylischen Comonomeren.

14. Ein Polymer gemäss Anspruch 10, erhältlich durch Photovernetzung eines Präpolymeren gemäss Anspruch 1 in Anwesenheit von 0,5 bis 80 Einheiten eines zusätzlichen vinylischen Comonomeren pro Einheit der Formel I, insbesondere 1 bis 30 Einheiten vinylisches Comonomer pro Einheit der Formel I und besonders bevorzugt 5 bis 20 Einheiten pro Einheit der Formel I.

15. Verfahren zur Herstellung eines Polymeren gemäss Anspruch 10, **dadurch gekennzeichnet, dass** man ein Präpolymer gemäss Anspruch 1 in Abwesenheit oder Anwesenheit eines zusätzlichen vinylischen Comonomeren photovernetzt.

16. Verfahren gemäss Anspruch 15, **dadurch gekennzeichnet, dass** das Präpolymer in im wesentlichen reiner Form eingesetzt wird.

17. Verfahren gemäss Anspruch 16, **dadurch gekennzeichnet, dass** das Präpolymer durch ein- oder mehrmalige Ultrafiltration in eine im wesentlichen reine Form übergeführt wird.

18. Verfahren gemäss Anspruch 15, **dadurch gekennzeichnet, dass** es in Lösung, insbesondere in wässriger Lösung, durchgeführt wird.

19. Formkörper bestehend im wesentlichen aus einem Polymer gemäss Anspruch 10.

20. Formkörper gemäss Anspruch 19, **dadurch gekennzeichnet, dass** es sich um eine Kontaktlinse handelt.

## Claims

1. A prepolymer which is a derivative of a polyvinyl alcohol having a molecular weight of at least about 2 000, which contains from about 0.5 to about 80%, based on the number of hydroxyl groups of the polyvinyl alcohol, of units of the formula I 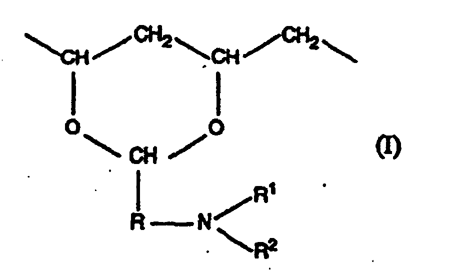 in which R is lower alkylene having up to 8 carbon atoms, R¹ is hydrogen or lower alkyl and R² is an olefinically unsaturated, electron-attracting, copolymerizable radical having preferably up to 25 carbon atoms.

2. A prepolymer according to claim 1, wherein R² is an olefinically unsaturated acyl radical of the formula R³-CO-, in which R³ is an olefinically unsaturated copolymerizable radical having 2 to 24 carbon atoms, preferably having 2 to 8 carbon atoms, particularly preferably having 2 to 4 carbon atoms.

3. A prepolymer according to claim 2, wherein R³ is alkenyl having 2 to 8 carbon atoms.

4. A prepolymer according to claim 1, wherein the radical R² is a radical of the formula II
-CO-NH-(R⁴-NH-CO-O)_{q}-R⁵-O-CO-R³ (II)
in which q is zero or one and R⁴ and R⁵, independently of one another, are lower alkylene having 2 to 8 carbon atoms, arylene having 6 to 12 carbon atoms, a saturated bivalent cycloaliphatic group having 6 to 10 carbon atoms, arylenealkylene or alkylenearylene having 7 to 14 carbon atoms or arylenealkylenearylene having 13 to 16 carbon atoms and in which R³ is an olefinically unsaturated copolymerizable radical having 2 to 24 carbon atoms, preferably having 2 to 8 carbon atoms, particularly preferably having 2 to 4 carbon atoms.

5. A prepolymer according to claim 1, which is a derivative of a polyvinyl alcohol having a molecular weight of at least about 2 000, which contains from about 0.5 to about 80%, based on the number of hydroxyl groups of the polyvinyl alcohol, of units of the formula III 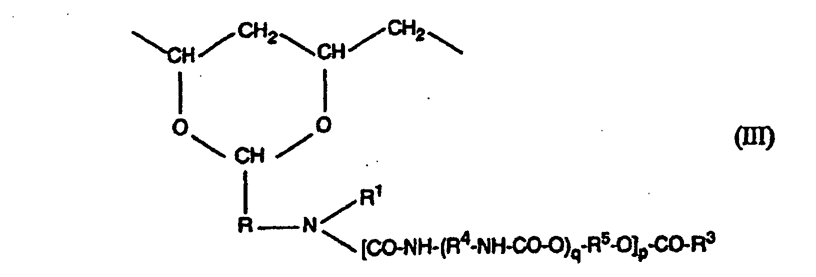 in which R is lower alkylene, R¹ is hydrogen or lower alkyl, p has the value zero or one, q has the value zero or one, R³ is an olefinically unsaturated copolymerizable radical having 2 to 8 carbon atoms and R⁴ and R⁵, independently of one another, are lower alkylene having 2 to 8 carbon atoms, arylene having 6 to 12 carbon atoms, a saturated bivalent cycloaliphatic group having 6 to 10 carbon atoms, arylenealkylene or alkylenearylene having 7 to 14 carbon atoms or arylenealkylenearylene having 13 to 16 carbon atoms.

6. A prepolymer according to claim 5, wherein R is lower alkylene having up to 6 carbon atoms, p is zero and R³ is alkenyl having 2 to 8 carbon atoms.

7. A prepolymer according to claim 5, wherein R is lower alkylene having up to 6 carbon atoms, p is one, q is zero, R⁵ is lower alkylene having 2 to 6 carbon atoms and R³ is alkenyl having 2 to 8 carbon atoms.

8. A prepolymer according to claim 5, wherein R is lower alkylene having up to 6 carbon atoms, p is one, q is one, R⁴ is lower alkylene having 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene, R⁵ is lower alkylene having 2 to 6 carbon atoms and R³ is alkenyl having 2 to 8 carbon atoms.

9. A prepolymer according to claim 1, which is a derivative of a polyvinyl alcohol having a molecular weight of at least about 2 000, which contains from about 1 to about 15%, based on the number of hydroxyl groups of the polyvinyl alcohol, of units of the formula I.

10. A polymer obtainable by photocrosslinking of a prepolymer according to claim 1, in the absence or presence of an additional vinylic comonomer.

11. A polymer according to claim 10, obtained by photocrosslinking of a prepolymer according to claim 1 in substantially pure form, in the absence or presence of an additional vinylic comonomer.

12. A polymer according to claim 11, the prepolymer being converted into a substantially pure form by ultrafiltration once or several times.

13. A polymer according to claim 10, obtainable by photocrosslinking of a prepolymer according to claim 1 in the absence of an additional vinylic comonomer.

14. A polymer according to claim 10, obtainable by photocrosslinking of a prepolymer according to claim 1 in the presence of from 0.5 to 80 units of an additional vinylic comonomer per unit of the formula I, in particular from 1 to 30 units of vinylic comonomer per unit of the formula I and particularly preferably from 5 to 20 units per unit of the formula I.

15. A process for the preparation of a polymer according to claim 10, wherein a prepolymer according to claim 1 is photocrosslinked in the absence or presence of an additional vinylic comonomer.

16. A process according to claim 15, wherein the prepolymer is used in substantially pure form.

17. A process according to claim 16, wherein the prepolymer is converted into a substantially pure form by ultrafiltration once or several times.

18. A process according to claim 15, which is carried out in solution, in particular in aqueous solution.

19. A moulding substantially comprising a polymer according to claim 10.

20. A moulding according to claim 19, which is a contact lens.

## Revendications

1. Prépolymère pour lequel il s'agit d'un dérivé d'un alcool de polyvinyle présentant un poids moléculaire au moins égal à 2 000, qui contient environ 0,5 à environ 80 %, sur la base du nombre de groupes hydroxyle de l'alcool de polyvinyle, de motifs de formule I, 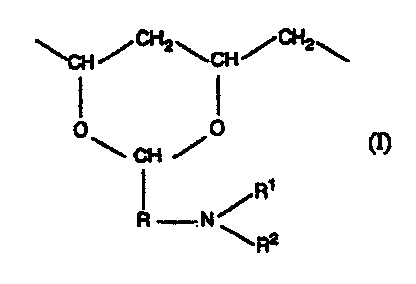 dans laquelle R est un alkylène inférieur comportant jusqu'à 8 atomes de carbone, R¹ est l'hydrogène ou un alkyle inférieur et R² est un radical copolymérisable insaturé en oléfine et preneur d'électrons comportant de préférence jusqu'à 25 atomes de carbone.

2. Prépolymère selon la revendication 1, dans lequel R² représente un radical acyle insaturé en oléfine de formule R³-CO-, dans laquelle R³ est un radical copolymérisable insaturé en oléfine comportant 2 à 24 atomes de carbone, de préférence 2 à 8 atomes de carbone, de façon particulièrement préférée 2 à 4 atomes de carbone.

3. Prépolymère selon la revendication 2, dans lequel R³ est un alcényle comportant 2 à 8 atomes de carbone.

4. Prépolymère s elon la revendication 1, d ans lequel le radical R² est un radical de formule II,
-CO-NH-(R⁴-NH-CO-O)_{q}-R⁵-O-CO-R³ (II)
dans laquelle q vaut 0 ou 1 et R⁴ et R⁵ représentent indépendamment l'un de l'autre un alkylène inférieur comportant 2 à 8 atomes de carbone, un arylène comportant 6 à 12 atomes de carbone, un groupe cycloaliphatique bivalent saturé comportant 6 à 10 atomes de carbone, un arylène-alkylène ou un alkylène-arylène comportant 7 à 14 atomes de carbone, ou un arylène-alkylène-arylène comportant 13 à 16 atomes de carbone, et dans laquelle R³ est un radical copolymérisable insaturé en oléfine comportant 2 à 24 atomes de carbone, de préférence 2 à 8 atomes de carbone, et de façon particulièrement préférée 2 à 4 atomes de carbone.

5. Prépolymère selon la revendication 1, pour lequel il s'agit d'un dérivé d'un alcool de polyvinyle présentant un poids moléculaire au moins égal à environ 2 000, qui contient environ 0,5 à environ 80 %, sur la base du nombre de groupes hydroxyle de l'alcool de polyvinyle, de motifs de formule III, 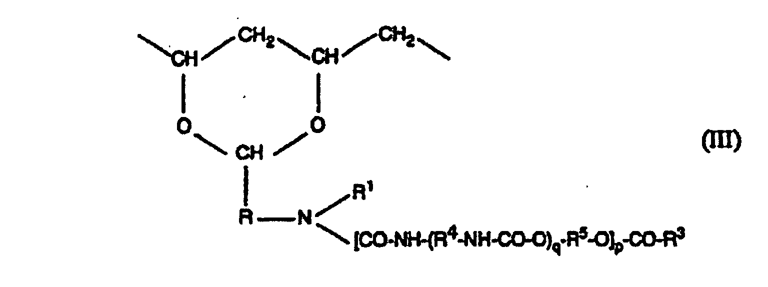 dans laquelle R est un alkylène inférieur, R¹ est l'hydrogène ou un alkyle inférieur, p vaut 0 ou 1, q vaut 0 ou 1, R³ est un radical copolymérisable insaturé en oléfine comportant 2 à 8 atomes de carbone, et R⁴ et R⁵ représentent indépendamment l'un de l'autre un alkylène inférieur comportant 2 à 8 atomes de carbone, un arylène comportant 6 à 12 atomes de carbone, un groupe cycloaliphatique bivalent saturé comportant 6 à 10 atomes de carbone, un arylène-alkylène ou un alkylène-arylène comportant 7 à 14 atomes de carbone ou un arylène-alkylène-arylène comportant 13 à 16 atomes de carbone.

6. Prépolymère selon la revendication 5, dans lequel R est un alkylène inférieur comportant jusqu'à 6 atomes de carbone, p vaut 0 et R³ est un alcényle comportant 2 à 8 atomes de carbone.

7. Prépolymère selon la revendication 5, dans lequel R est un alkylène inférieur comportant jusqu'à 6 atomes de carbone, p vaut 1, q vaut 0, R⁵ est un alkylène inférieur comportant 2 à 6 atomes de carbone et R³ est un alcényle comportant 2 à 8 atomes de carbone.

8. Prépolymère selon la revendication 5, dans lequel R est un alkylène inférieur comportant jusqu'à 6 atomes de carbone, p vaut 1, q vaut 1, R⁴ est un alkylène inférieur comportant 2 à 6 atomes de carbone, un phénylène, non substitué ou substitué par un alkyle inférieur, un cyclohexylène ou un cyclohexylène-alkylène inférieur, non substitué ou substitué par un alkyle inférieur, un phénylène-alkylène inférieur, un alkylène inférieur-phénylène ou un phénylène-alkylène inférieur-phénylène, R⁵ est un alkylène inférieur comportant 2 à 6 atomes de carbone, et R³ est un alcényle comportant 2 à 8 atomes de carbone.

9. Prépolymère selon la revendication 1, pour lequel il s'agit d'un dérivé d'un alcool de polyvinyle présentant un poids moléculaire au moins égal à 2 000, qui contient environ 1 à environ 15 %, sur la base du nombre de groupes hydroxyle de l'alcool de polyvinyle, de motifs de formule I.

10. Polymère pouvant être obtenu par photoréticulation d'un prépolymère selon la revendication 1, en absence ou en présence d'un comonomère de vinyle supplémentaire.

11. Polymère selon la revendication 10, pouvant être obtenu par photoréticulation d'un prépolymère selon la revendication 1 sous une forme essentiellement pure, en absence ou en présence d'un comonomère de vinyle supplémentaire.

12. Polymère selon la revendication 11, dans lequel le prépolymère est transformé par une ou plusieurs ultrafiltrations en une forme essentiellement pure.

13. Polymère selon la revendication 10, pouvant être obtenu par photoréticulation d'un prépolymère selon la revendication 1, en absence ou en présence d'un comonomère de vinyle supplémentaire.

14. Polymère selon la revendication 10, pouvant être obtenu par photoréticulation d'un prépolymère selon la revendication 1, en présence de 0,5 à 80 motifs d'un comonomère vinylique supplémentaire par motif de formule I, en particulier de 1 à 30 motifs de comonomère de vinyle par motif de formule I, et de façon particulièrement préférée de 5 à 20 motifs par motif de formule I.

15. Procédé de fabrication d'un polymère selon la revendication 10, **caractérisé en ce que** l'on procède à une photoréticulation d'un prépolymère selon la revendication 1 en absence ou en présence d'un comonomère vinylique supplémentaire.

16. Procédé selon la revendication 15, **caractérisé en ce que** le prépolymère est utilisé sous une forme essentiellement pure.

17. Procédé selon la revendication 16, **caractérisé en ce que** le prépolymère est transformé en une forme essentiellement pure par une ou plusieurs ultrafiltrations.

18. Procédé selon la revendication 15, **caractérisé en ce qu'**il est réalisé en solution, en particulier en solution aqueuse.

19. Corps moulé composé essentiellement d'un polymère selon la revendication 10.

20. Corps moulé selon la revendication 19, **caractérisé en ce qu'**il s'agit d'une lentille de contact.
